# NEW EUROPEAN PATENT SPECIFICATION

(11) **EP 0 321 031 B2**
(45) Date of publication and mention of the opposition decision: **19.07.1995**
(45) Mention of the grant of the patent: 04.03.1992
(21) Application number: 88202824.4
(22) Date of filing: 09.12.1988
(51) Int. Cl.: A01B 33/06, A01B 35/30, A01B 61/00

(54) **A soil cultivating machine**
Bodenbearbeitungsmaschine
Machine pour travailler le sol

(30) Priority: 14.12.1987 NL 8703013
(43) Date of publication of application: 21.06.1989
(73) Proprietor: C. van der Lely N.V., NL-3155 PD Maasland (NL)
(72) Inventor: Bom, Cornelis Johannes Gerardus, Rozenburg (NL); Kuipers, Arie, Harlingen (NL)
(74) Representative: Mulder, Herman

(56) References cited:
- DD-A- 100 131
- DD-A- 203 807
- DE-A- 2 755 001
- DE-A- 2 841 468
- DE-A- 3 504 654
- DE-B- 2 552 810
- DE-C- 420 963
- DE-C- 443 219
- DE-U- 1 985 782
- DE-U- 1 989 609
- FR-A- 1 114 553
- FR-A- 1 122 656
- FR-A- 2 330 296
- FR-A- 2 404 381
- US-A- 3 559 744
- US-A- 4 142 587
- Dubbels Taschenbuch für den Maschinenbau, Springer-Verlag 1953, Erster Band, pages 238,239

## Description

The invention relates to a soil cultivating machine comprising a carrier frame which can be coupled to a tractor and to which by means of pivotal connections there is attached a frame portion that is movable in height relative to said carrier frame and carries a plurality of soil working members drivable around upwardly directed shafts and arranged in side-by-side relationship in a row transversely to the direction of operative travel, the said pivotal connections including a pivotal quadrilateral.

In soil cultivating machines of the above-defined type, which are known e.g. from DE-OS 35 04 654, the frame portion can deflect upwardly by means of the pivotal connections when the soil working members hit obstacles in the soil. However, with this construction it may happen that, due to its pivotal support, the frame portion is not always adequately stable during operation, thereby disadvantageously influencing the action of the soil working members.

Using the construction according to the invention, this disadvantage can be eliminated by designing at least one side of the pivotal quadrilateral elastically deformable and that at least one of the pivotal connections of said one pivotal quadrilateral side is provided with a flexible buffer. Using this construction, it is possible to obtain a compact pivotal connection which, during operation, significantly increases the stability of the frame portion and nevertheless, if so required, allows of a quick movement thereof.

For a better understanding of the invention and to show how the same may be carried into effect, reference will now be made, by way of example, to an embodiment shown in the accompanying drawings, wherein:
Figure 1 is a plan view of a soil cultivating machine comprising a construction according to the invention;
Figure 2 is, to an enlarged scale, a view taken in the direction of the arrow II in Figure 1, and
Figure 3 shows, to an enlarged scale, part of a pivotal polygon including the construction in accordance with the invention.

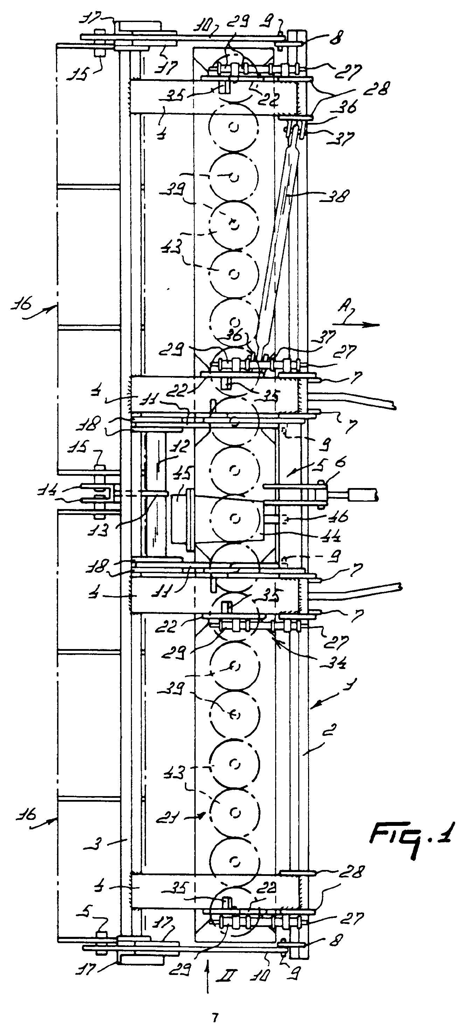

The implement shown in the drawings concerns a soil cultivating machine, in particular one for the preparation of a seedbed, which machine comprises a carrier frame 1 extending transversely to the direction of operative travel A. The carrier frame 1 is assembled from two frame beams 2 and 3, which beams are arranged at some interspace behind each other and extend at least substantially horizontally and transversely to the direction of operative travel A. Near their ends and on both sides of the mid-way point at equal distance therefrom, the frame beams 2 and 3 are interconnected by means of supports 4 which extend in the direction of operative travel A. At the facing sides of the centre supports 4 there are connected the upwardly extending legs of a trestle 5, which legs are also mounted on the front frame beam 2. At its upper side, the trestle 5 is provided with a coupling point 6 for the upper arm of the three-point lifting hitch of a tractor, while on both sides of the supports 4 the front frame beam 2 is provided with pairs of plates, each of which constitutes a coupling point 7 for the lower arms of the three-point lifting hitch of a tractor. At the ends and near the facing sides of the centre supports 4, the frame beam 2 is provided at its rear side with lugs 8 to which is connected a pin 9 that extends transversely to the direction of operative travel A, the arrangement being such that the respective pins 9 are in alignment (Figure 1). Around the outer pins 9 there are arranged freely pivotably arms 10 which extend rearwardly. Around the pins 9 located near the centre supports 4 there are pivotal arms 11, which arms constitute part of a carrier frame which furthermore includes a cross-beam 12, the said cross-beam being arranged between downwardly directed portions of the arms 11. Near its mid-way point, the cross-beam 12 is provided with an obliquely rearwardly and downwardly extending support 13 which terminates in a fork 14. The legs of the fork 14 are fitted with pins 15 which extend transversely to the direction of operative travel A and at least substantially horizontally, with the aid of which pins an end of two aligned rollers 16 is supported freely rotatably. At their other ends, the rollers 16 are also supported freely rotatably by a pin 15 fitted to an arm 10 and located in alignment with said former pins 15.

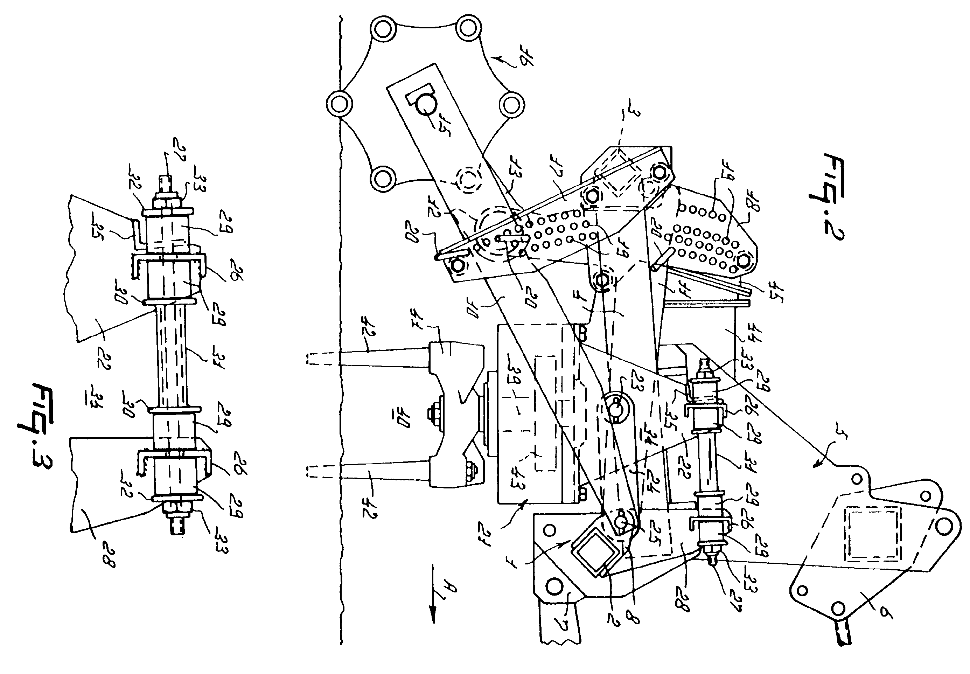

Each of the outer arms 10 for the rollers 16 is arranged capably of movement in height between two plates 17 which extend obliquely downwardly and forwardly from one end of the frame beam 3, while each of the arms 11 is movable between two interspaced plates 18 connected to the forwardly directed side of the frame beam 3. Each of the respective plates 17 and 18 is provided with three rows of apertures 19, which rows are arranged behind each other, extend upwardly and are located on the arc of a circle having its centre point on the longitudinal centre line of the respective pivot pins 9 for the arms 10 and 11; the configuration of the apertures in the respective rows is shown in Figure 2. By means of pins 20 bearing on the upper side of the respective arms 10 and 11, the position of the rollers 16 can be adjusted relative to the carrier frame 1. With the aid of a pin 20 to be arranged at the bottom sides of the outer arms 10, the position of the outer arms is then fixed. During operation, this provides a certain degree of flexibility for the rollers at their facing sides, which at a working width of 4.5 m, i.e. the working width of the machine in accordance with the embodiment, may be desirable. At the rear sides of the arms 11 there is a stop which, during transport, prevents excessive downward movement by contacting the upper side of the fame beam 3. As is apparent from Figure 1, between the fame beams 2 and 3 of the carrier frame 1 there is arranged a box-like frame portion 21 of rectangular cross-section (Figure 2). At its upper side, the frame portion 21 is provided with upwardly directed supporting plates 22 which are arranged such that they contact the outer sides of the supports 4 (Figure 1). As is apparent from Figure 2, the supporting plates 22 are triangular in shape, their bases being fitted to the upper side of the frame portion 21. Near its mid-way point at some distance above the frame portion 21, each supporting plate 22 is provided with an at least substantially horizontal pin 23 which extends transversely to the direction of operative travel A and is surrounded by a forwardly extending arm 24. The leading end of the arm 24 is arranged freely pivotably on the frame beam 2 by means of a pin 25 extending parallel to the pin 23. The upper side of each supporting plate 22 is fitted with an U-shaped support 26 having forwardly extending legs. Through that portion of the U-shaped portion 26 that is located between the legs there is passed with some clearance an arm 27 in the form of a rod, which arm is also passed with some clearance through the portion between the legs of an identically arranged support 26 on an upwardly extending plate 28 mounted on the upper side of the frame beam 2 (Figure 3).

On both sides of the U-shaped supports 26, the rod 27 is enveloped by a cylindrical buffer 29 made of a flexible material, preferably rubber. The buffers 29 located at the inner sides of the U-shaped supports 26 are enclosed between the U-shaped supports and stops 30 arranged at the ends of a bushing 31, which bushing is slidable over the rod (Figure 3). The outermost buffers 29 are arranged between the U-shaped supports 26 and stops 32 on the rod 27, which stops 32 are movable by means of nuts 33 adapted to co-operate with thread on the ends of the rod. By means of the adjustable stops 32, the reaction force counteracting a pivotal movement can be increased or decreased. The arm 24 and the rod 27 constitute a pivotal polygon 34 in the shape of a parallelogram. By means of the flexible buffers 29 and the clearance in the passage for the rod 27 there are created imaginary pivot points, the said buffers counteracting a pivotal movement of the polygon. At their rear sides, each supporting plate 22 is provided in the region of the upper arm 27 of the polygon 34, formed by the rod, with a stop 35 which extends transversely and is adapted to co-operate with the upper side of a support 4, the arrangement being such that, during transport, the frame portion 21 cannot move too far downwards. Between the outermost supporting plate 22 on the frame portion 21 that, taken in the direction of operative travel A of the machine, is the left-hand one and a supporting plate 22 arranged near the mid-way point on the frame portion 1 there is fitted a stabilizer rod 38 by means of lugs 36 and pins 37. Inside the frame portion 21 there are supported at equal interspaces of preferably 25 cms the upwardly directed, preferably vertical, shafts 39 of soil working members 40. Each of the soil working members 40 includes a carrier 41 which is provided on the end of a shaft 39 projecting from the bottom side of the frame portion 21 and near its ends is provided with downwardly extending soil working elements 42 constituted by lines. Inside the box-like frame portion 21, each shaft 39 is provided with a pinion 43, the arrangement being such that the pinions on the shafts of adjacent soil working members 40 are in driving connection with each other. Near the centre of the frame portion 21, the shaft 39 of a soil working member 40 is extended upwardly and reaches by means of this extension to into a gear box 44, inside which this shaft is in driving connection via a bevel gear transmission with a shaft extending in the direction of operative travel A. Via a speed variator 45 located at the rear side of the gear box, the relevant shaft is in driving connection with a shaft 46 which extends in the direction of operative travel A and projects from the gear box at the front side.

The machines as described in the foregoing operates as follows:
During operation, the machine is connected by means of the coupling points 6 and 7 to the upper and lower arms, respectively, of the lifting hitch of a tractor and the soil working members 40 can be driven such from the power take-off shaft of the tractor via an intermediate shaft and the above-described transmission that two adjacent soil working members rotate in opposite directions (Figure 1), whereby by means of their soil working elements 42 they cultivate at least contiguous strips of soil. The working depth of the soil working members 40 can be set by means of the aligned rollers 16 with the aid of the pins 20 and the apertures 19 arranged in the respective pairs of plates 17 and 18. During operation, the frame portion 21 carrying the soil working members 40 is maintained in a position as shown in Figure 2 by means of the pivotal polygons 34 in the form of parallelograms, and, as has been described in the foregoing, the rollers determine the working depth. Using the polygons 34 in accordance with the invention, at least one side of the pivotal polygon is elastically deformable owing to the fact that the upper imaginary pivot points formed by the respective feed-through points of the rod 27 through the supports 26 are elastically movable. This provides an adequate stability of the frame portion 21 carrying the soil working members 40. When one or more soil working members 40 hits/hit hard objects, e.g. stones, a quick upward deflection of the frame portion 21 carrying the soil working members is nevertheless possible, the assembly being rapidly returned to its initial position after deflection.

As has already been described in the foregoing, the flexibility of the buffers 29 can be increased or decreased with the aid of the nuts 33 and, hence, the elastic deformability of the parallelogram 34.

## Claims

1. A soil cultivating machine comprising a carrier frame (1) which can be coupled to a tractor and to which by means of pivotal connections there is attached a frame portion (21) that is movable in height relative to said carrier frame (1) and carries a plurality of soil working members (40) drivable around upwardly directed shafts and arranged in side-by-side relationship in a row transversely to the direction of operative travel, the said pivotal connections including a pivotal quadrilateral (34), characterized in that at least one side of the pivotal quadrilateral (34) is designed elastically deformable, and that at least one of the pivotal connections of said one pivotal quadrilateral side is provided with a flexible buffer (29).

2. A soil cultivating machine as claimed in claim 1, characterized in that two pivotal connections of said one pivotal quadrilateral side are provided with a flexible buffer (29).

3. A soil cultivating machine as claimed in claim 2, characterized in that the relevant pivotal connections are located near the upper side of the pivotal quadrilateral (34).

4. A soil cultivating machine as claimed in claim 2 or 3, characterized in that the relevant pivotal connections are located near the ends of an arm (27) constituting part of the pivotal quadrilateral (34).

5. A soil cultivating machine as claimed in claim 4, characterized in that the arm (27) is constituted by a rod which is passed with some clearance through a support (26) provided on the carrier frame (1) and on the frame portion (21), respectively, and on both sides of a support (26) the rod is enveloped by flexible material (29).

6. A soil cultivating machine as claimed in claim 5, characterized in that the flexible material (29) is enclosed between a support (26) and a stop (30) provided on the rod.

7. A soil cultivating machine as claimed in claim 6, characterized in that a stop (30) is present near each end of a bushing (31) arranged between the supports (26) around the rod.

8. A soil cultivating machine as claimed in claim 6 or 7, characterized in that at the outer sides of the supports (26) the flexible material (29) is enclosed between a support (26) and an adjustable stop (32) on the rod.

9. A soil cultivating machine as claimed in any one of the preceding claims, characterized in that a pivotal quadrilateral (34) is in the form of a parallelogram.

10. A soil cultivating machine as claimed in claim 9 and in any one of the preceding claims 5 to 8, characterized in that the rod constitutes the upper arm (27) of the quadrilateral (34).

11. A soil cultivating machine as claimed in claim 10, characterized in that in the region of the upper arm (27) of the quadrilateral (34) there is provided a stop (35) which is adapted to co-operate with a support (4) on the carrier frame (1) to be coupled to a tractor.

12. A soil cultivating machine as claimed in any one of the preceding claims, characterized in that between the frame portion (21) and the carrier frame (1) there is arranged a stabilizer rod (38) which has one end attached pivotably to the carrier frame (1) and its other end attached pivotably to a support on the frame portion (21).

13. A soil cultivating machine as claimed in any one of the preceding claims, characterized in that behind the soil working members (40) there are provided two rollers (16) which are in alignment and are attached pivotably near the mid-way point to the carrier frame (1) by means of two spaced-apart arms (11).

14. A soil cultivating machine as claimed in any one of the preceding claims, characterized in that the soil working members (40) are rotatable about upwardly directed shafts (39) and are motor-driven during operation, and that the carrier frame (1) can be coupled to a three-point lifting hitch of a tractor by means of a three-point connection (5, 6, 7).

## Patentansprüche

1. Bodenbearbeitungsmaschine mit einem Tragrahmen (1), der an einen Schlepper anzuschließen und an dem mittels Schwenkverbindungen ein Rahmenteil (21) angebracht ist, das relativ zu dem Tragrahmen (1) höhenbeweglich ist und eine Vielzahl von Bodenbearbeitungsgliedern (40) trägt, die um die Achsen aufwärts gerichteter Wellen anzutreiben und nebeneinander in einer Reihe quer zur Arbeitsrichtung angeordnet sind, wobei die Schwenkverbindungen eine schwenkbare Vierseitenkonstruktion (34) aufweisen,
dadurch gekennzeichnet, daß mindestens eine Seite der schwenkbaren Vierseitenkonstruktion (34) elastisch verformbar ausgebildet ist, und daß mindestens eine der Schwenkverbindungen der einen Seite der schwenkbaren Vierseitenkonstruktion einen flexiblen Puffer (29) aufweist.

2. Bodenbearbeitungsmaschine nach Anspruch 1,
dadurch gekennzeichnet, daß zwei Schwenkverbindungen der einen Seite der schwenkbaren Vierseitenkonstruktion einen flexiblen Puffer (29) aufweisen.

3. Bodenbearbeitungsmaschine nach Anspruch 2,
dadurch gekennzeichnet, daß die jeweiligen Schwenkverbindungen nahe der oberen Seite der schwenkbaren Vierseitenkonstruktion (34) angeordnet sind.

4. Bodenbearbeitungsmaschine nach den Ansprüchen 2 oder 3,
dadurch gekennzeichnet, daß die jeweiligen Schwenkverbindungen nahe den Enden eines Armes (27) angeordnet sind, der Bestandteil der schwenkbaren Vierseitenkonstruktion (34) ist.

5. Bodenbearbeitungsmaschine nach Anspruch 4,
dadurch gekennzeichnet, daß der Arm (27) durch eine Stange gebildet ist, die mit Spiel durch einen Träger (26) hindurchgeführt ist, der an dem Tragrahmen (1) bzw. an dem Rahmenteil (21) vorgesehen ist, und daß die Stange an beiden Seiten eines Trägers (26) mit flexiblem Material (29) umgeben ist.

6. Bodenbearbeitungsmaschine nach Anspruch 5,
dadurch gekennzeichnet, daß das flexible Material (29) zwischen einem Träger (26) und einem an der Stange vorgesehenen Anschlag (30) eingeschlossen ist.

7. Bodenbearbeitungsmaschine nach Anspruch 6,
dadurch gekennzeichnet, daß sich ein Anschlag (30) nahe jedem Ende einer Hülse (31) befindet, die die Stange zwischen den Trägern (26) umgibt.

8. Bodenbearbeitungsmaschine nach den Ansprüchen 6 oder 7,
dadurch gekennzeichnet, daß das an den äußeren Enden der Träger (26) befindliche flexible Material (29) zwischen einem Träger (26) und einem auf der Stange angeordneten einstellbaren Anschlag (32) eingeschlossen ist.

9. Bodenbearbeitungsmaschine nach einem der vorhergehenden Ansprüche,
dadurch gekennzeichnet, daß eine schwenkbare Vierseitenkonstruktion (34) die Form eines Parallelogramms hat.

10. Bodenbearbeitungsmaschine nach Anspruch 9 sowie nach einem der vorhergehenden Ansprüche 5 bis 8,
dadurch gekennzeichnet, daß die Stange den oberen Arm (27) der Vierseitenkonstruktion (34) bildet.

11. Bodenbearbeitungsmaschine nach Anspruch 10,
dadurch gekennzeichnet, daß im Bereich des oberen Armes (27) der Vierseitenkonstruktion (34) ein Anschlag (35) vorgesehen ist, der zum Zusammenwirken mit einem Träger (4) ausgebildet ist, welcher an dem an einen Schlepper anzuschließenden Tragrahmen (1) angebracht ist.

12. Bodenbearbeitungsmaschine nach einem der vorhergehenden Ansprüche,
dadurch gekennzeichnet, daß zwischen dem Rahmenteil (21) und dem Tragrahmen (1) eine Stabilisierstange (38) angeordnet ist, deren eines Ende schwenkbar mit dem Tragrahmen (1) und deren anderes Ende schwenkbar mit einem an dem Rahmenteil (21) befindlichen Träger verbunden ist.

13. Bodenbearbeitungsmaschine nach einem der vorhergehenden Ansprüche,
dadurch gekennzeichnet, daß hinter den Bodenbearbeitungsgliedern (40) zwei Walzen (16) vorhanden sind, die miteinander fluchten und mittels zweier mit Abstand voneinander angeordneter Arme (11) an dem Tragrahmen (1) nahe dessen Mitte schwenkbar angebracht sind.

14. Bodenbearbeitungsmaschine nach einem der vorhergehenden Ansprüche,
dadurch gekennzeichnet, daß die Bodenbearbeitungsglieder (40) um die Achsen aufwärts gerichteter Wellen (39) drehbar und im Betrieb motorisch angetrieben sind, und daß der Tragrahmen (1) mittels eines Dreipunkt-Anschlusses (5, 6, 7) an eine Dreipunkt-Hebevorrichtung eines Schleppers anzuschließen ist.

## Revendications

1. Machine pour cultiver le sol comprenant un châssis porteur (1) qui peut être couplé à un tracteur, auquel est attaché au moyen de liaisons articulées une partie de châssis (21) qui est mobile en hauteur par rapport audit châssis porteur (1) et qui porte une pluralité d'organes de travail du sol (40) entraînés autour d'arbres dirigés vers le haut et disposés côte à côte en une rangée transversalement au sens de marche du travail, lesdites liaisons articulées comportant un quadrilatère articulé (34),
**caractérisée** en ce qu'au moins un côté du quadrilatère articulé (34) est conçu pour être déformable élastiquement, et en ce qu'au moins une des liaisons articulées dudit côté du quadrilatère articulé est muni d'un tampon flexible (29).

2. Machine pour cultiver le sol selon la revendication 1, caractérisée en ce que deux liaisons articulées dudit côté du quadrilatère articulé sont munies d'un tampon flexible (29).

3. Machine pour cultiver le sol selon la revendication 2, caractérisée en ce que les liaisons articulées appropriées sont situées près du côté supérieur du quadrilatère articulé (34).

4. Machine pour cultiver le sol selon la revendication 2 ou 3, caractérisée en ce que les liaisons articulées appropriées sont situées près des extrémités d'un bras (27) formant partie du quadrilatère articulé (34).

5. Machine pour cultiver le sol selon la revendication 4, caractérisée en ce que le bras (27) est constitué par une tige qui traverse, avec un certain jeu, un support (26) prévu respectivement sur le châssis porteur (1) et sur la partie de châssis (21), et en ce que, sur les deux côtés d'un support (26), la tige est enveloppée par un matériau flexible (29).

6. Machine pour cultiver le sol selon la revendication 5, caractérisée en ce que le matériau flexible (29) est enclos entre un support (26) et une butée (30) prévue sur la tige.

7. Machine pour cultiver le sol selon la revendication 6, caractérisée en ce qu'une butée (30) est présente près de chaque extrémité d'une douille (31) disposée entre les supports (26) autour de la tige.

8. Machine pour cultiver le sol selon la revendication 6 ou 7, caractérisée en ce que, sur les côtés extérieurs des supports (26), le matériau flexible (29) est enclos entre un support (26) et une butée réglable (32) sur la tige.

9. Machine pour cultiver le sol selon l'une quelconque des revendications précédentes, caractérisée en ce qu'un quadrilatère articulé (34) est sous la forme d'un parallèlogramme.

10. Machine pour cultiver le sol selon la revendication 9 et selon l'une quelconque des revendications 5 à 8 précédentes, caractérisée en ce que la tige constitue le bras supérieur (27) du quadrilatère (34).

11. Machine pour cultiver le sol selon la revendication 10, caractérisée en ce que, dans la région du bras supérieur (27) du quadrilatère (34), il est prévu une butée (35) qui est adaptée pour coopérer avec un support (4) sur le châssis porteur (1) destiné à être couplé à un tracteur.

12. Machine pour cultiver le sol selon l'une quelconque des revendications précédentes, caractérisée en ce qu'entre la partie de châssis (21) et le châssis porteur (1) est disposée une tige stabilisatrice (38) qui a une extrémité articulée sur le châssis porteur (1) et son autre extrémité articulée sur un support sur la partie de châssis (21).

13. Machine pour cultiver le sol selon l'une quelconque des revendications précédentes, caractérisée en ce que, derrière les organes de travail du sol (40), sont prévus deux rouleaux (16) qui sont en alignement et qui sont attachés de manière pivotante, près du point milieu, au châssis porteur (1) au moyen de deux bras (11) espacés entre eux.

14. Machine pour cultiver le sol selon l'une quelconque des revendications précédentes, caractérisée en ce que les organes de travail du sol (40) sont rotatifs autour d'arbres (39) dirigés vers le haut et sont entraînés par un moteur pendant le travail, et en ce que le châssis porteur (1) peut être couplé à un dispositif d'attelage-levage à trois points d'un tracteur au moyen d'une liaison à trois points (5, 6, 7).
